# EUROPEAN PATENT SPECIFICATION

(11) **EP 3 861 415 B1**
(45) Date of publication and mention of the grant of the patent: **14.06.2023**
(21) Application number: 19773947.7
(22) Date of filing: 20.09.2019
(51) Int. Cl.: G05B 23/02

(54) **METHOD AND CONTROL SYSTEM FOR DETECTING CONDITION OF PLURALITY OF PROCESS EQUIPMENT IN INDUSTRIAL PLANT**
VERFAHREN UND STEUERSYSTEM ZUR ERFASSUNG DES ZUSTANDS EINER VIELZAHL VON PROZESSEINRICHTUNGEN IN EINER INDUSTRIEANLAGE
PROCÉDÉ ET SYSTÈME DE COMMANDE PERMETTANT DE DÉTECTER L'ÉTAT D'UNE PLURALITÉ D'ÉQUIPEMENTS DE TRAITEMENT DANS UNE INSTALLATION INDUSTRIELLE

(30) Priority: 01.10.2018 IN 201841037096
(43) Date of publication of application: 11.08.2021
(73) Proprietor: ABB Schweiz AG, 5400 Baden (CH)
(72) Inventor: GUGALIYA, Jinendra, Bangalore 560048 (IN); BONGIOVI, Alessandro, 16149 Genova (IT); KUMAR VIJ, Rahul, Bangalore 560048 (IN); SINGH, Harvinder, Bangalore 560048 (IN)
(74) Representative: Zimmermann & Partner Patentanwälte mbB
(86) International application number: PCT/IB2019/057962
(87) International publication number: WO 2020/070574

(56) References cited:
- WO-A1-2007/067521
- US-A1- 2016 116 892

## Description

### TECHNICAL FIELD

The present disclosure in general relates to detection of condition of plurality of process equipment. More particularly, the present disclosure relates to an automated method for detecting condition of plurality of process equipment in an industrial plant and control system thereof.

### BACKGROUND

Industrial plants such as power plants, cement plants, refineries and so on, include plurality of process equipment used for physical or chemical methods for mechanical or thermal treatment or for processing raw material or product in the industrial plant. The plurality of process equipment may include, but is not limited to, turbines, pumps, motors, fans, compressors, boilers, heat exchangers and so on. Each of the plurality of process equipment may be associated with plurality of faults which may affect working of respective process equipment. For example, turbine may be associated with fault of steam leakage, motor may be associated with fault of rotor eccentricity, fan may be associated with fault of broken bearings, boiler may be associated with fault of air leakages, heat exchangers may be associated with fault of boiler and so on. For an effective functioning of the plurality of process equipment in the industrial plant, there may be a need to detect the plurality of faults, and initiate preventive maintenance to mitigate adverse effects of such faults in the industrial plant.

Usually, a fault in a process equipment may be detected through analysis by an expert in the field. For example, by observing a symptom of excessive vibration in the motor, the expert may predict that the fault may be associated with the motor eccentricity or broken bar. Using such analysis, the expert may prepare a look up table comprising faults and associated symptoms (also referred to as variables or parameters) for each of the plurality of process equipment. The association of the parameters with each of the faults may be indicated in form of weights. That is, each of the parameters may be provided with a particular value of weight for each of the faults. The value of weight corresponding to a fault and a parameter may indicate dependency of the fault on the parameter. Hence, the weight matrix may be used as reference to understand role of each of the parameters in detection of a given fault. Consider the process equipment is a turbine. An exemplary representation of part of a weight matrix indicating a fault of oil instability of a journal bearing in the turbine, and associated parameters is illustrated in **Table 1** below:

**Table 1**

| | Harmonics (0.42/0.48X) | Harmonics (IX) | Oil temperature | Speed |
|---|---|---|---|---|
| Oil instability in journal bearing | 0.7 | 0.15 | 0.075 | 0.075 |

From the table, the parameters may be harmonics with 0.42/0.48X axial, harmonics with 1x axial, oil temperature and speed. Each of the parameters are provided with a weight to indicate relation of respective parameter with the fault of oil instability. From the table, the fault of oil instability is strongly related to the harmonics with 0.42/0.48X axial with weight of 0.7 on scale of 0 to 1. The fault of oil instability is mildly related to the harmonics with 1X axial with weight of 0.15 on scale of 0 to 1. The fault of oil instability is least related to the oil temperature and the speed with weight of 0.075 on scale of 0 to 1.

Such weight matrix for each of the plurality of process equipment may be typically entered by the expert based on domain knowledge. At a given point of time, one or more faults associated with the plurality of process equipment may be detected using the weight matrix, based on the parameters. Parameters associated with abnormalities are identified and using such identified parameters and the weight matrix, one or more faults in a process equipment is detected. However, using an accurate weight matrix is crucial to achieve an accurate detection of faults. High amount of expert efforts may be involved in generating the accurate weight matrix, as such weight matrix may need to be configured for each of the plurality of process equipment. By involving an expert, human errors cannot be completely ruled out. Patent application US 2016/0116892 A1 discloses a method of cause analysis and correction for manufacturing data. The method is adapted to a manufacturing process in a manufacturing system and includes: based on a plurality of historic manufacturing data, establishing at least one abnormal classification rule and at least one normal classification rule, and storing the at least one abnormal classification rule and the at least one normal classification rule in a database storage device. The establishment of abnormal classification rules and normal classification rules may use statistical or data mining methods such as a decision tree algorithm or a correlation analysis algorithm. Patent application WO 2007/067521 A1 discloses a method for selecting a set of training data from a set S of samples from a machine condition monitoring system. The selected set of training data is for use in training a statistical model for evaluating measurements in the machine condition monitoring system. The method includes the following steps for each sample *p* from the set *S*: calculating a distance from the sample *p* to a node of a *k*d-tree, wherein each node of the *k*d-tree is empty or represents another sample removed from the set *S*; if the calculated distance is greater than a distance threshold rₘₐₓ , and the node of the *k*d-tree has children, calculating a distance from the sample *p* to a child of the node selected according to a classification of *p* in the *k*d-tree; repeating the previous step until either the calculated distance is below the distance threshold rₘₐₓ, or the node of the *k*d-tree has no children; and if no calculated distance is below the distance threshold rₘₐₓ, then populating a next leaf in the *k*d-tree with *p.* After the steps are performed on each sample *p,* the nodes of the *k*d-tree are used as the set of training data.

### SUMMARY

The present disclosure provides a method for detecting a condition of a plurality of pieces of process equipment in an industrial plant, according to the features of claim 1. The present disclosure further provides a control system for detecting a condition of a plurality of pieces of process equipment in an industrial plant, according to the features of claim 4.

### BRIEF DESCRIPTION OF ACCOMPANYING DRAWINGS

**Figure 1** illustrates a block diagram of a control system including one or more servers for detecting condition of plurality of process equipment, in accordance with an embodiment of the present disclosure;
**Figure 2** shows an exemplary environment of a control system for detecting condition of plurality of process equipment, in accordance with an embodiment of the present disclosure;
**Figure 3** illustrates graph plotted for plurality of historic values of plurality of parameters against predefined duration of time, for generating a weight matrix, in accordance with an embodiment of the present disclosure;
**Figure 4** illustrates an exemplary representation of a decision tree, in accordance with an embodiment of the present disclosure;
**Figure 5a** illustrates a flowchart for detecting condition of plurality of process equipment, in accordance with an embodiment of the present disclosure;
**Figure 5b** illustrates a flowchart for determining threshold attribute, in accordance with an embodiment of the present disclosure; and
**Figure 5c** illustrates a flowchart for generating weight matrix, in accordance with an embodiment of the present disclosure.

### DETAILED DESCRIPTION

In an embodiment, the present invention discloses a method and a control system for detecting condition of a plurality of process equipment in an industrial plant. The proposed methodology implements machine learning techniques for detecting the fault. The machine learning techniques include a supervised learning and unsupervised learning. Real-time values of a plurality of parameters associated with each of the plurality of process equipment, along with a weight matrix and threshold attribute is used in the unsupervised learning to detect the condition. The weight matrix associated with each of the plurality of process equipment is generated using the supervised learning. Plurality of historic values of the plurality of parameters relating to the corresponding process equipment are analysed in the supervised learning to generate the weight matrix for the corresponding process equipment. The threshold attribute associated with each of the plurality of parameters for the corresponding process equipment is determined using the real-time values of said plurality of parameters.

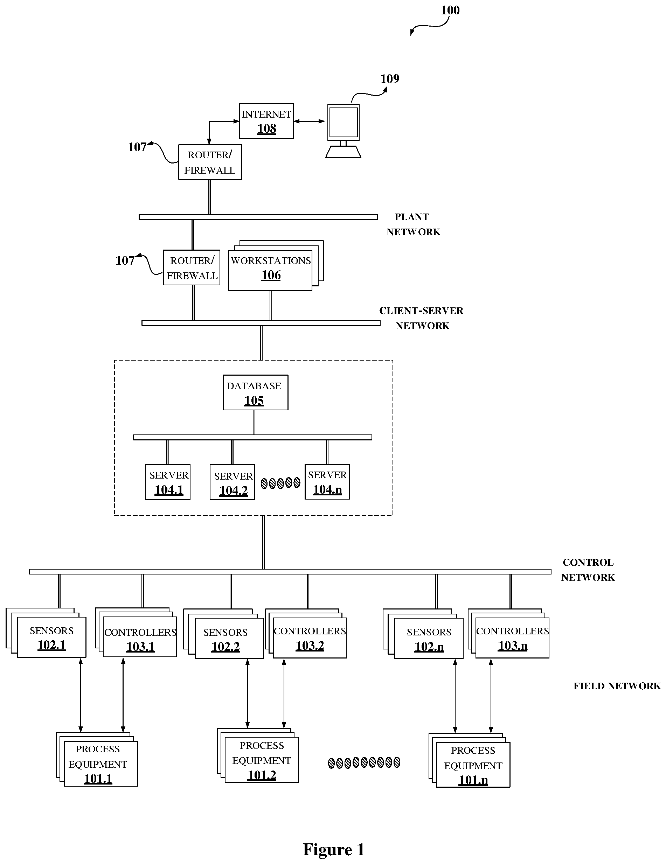

**Figure 1** illustrates a block diagram of a control system 100. As shown in **Figure 1****,** the control system 100 comprises multiple layers of network. Bottom most layer of the control system 100 is a field network that comprises a plurality of process equipment 101.1......101.n (hereafter referred to as plurality of process equipment 101), a plurality of sensors 102.1...... 102.n (hereafter referred to as plurality of sensors 102) and a plurality of controllers 103.1...... 103.n (hereafter referred to as plurality of controllers 103). Each of the plurality of process equipment 101 may be operationally connected with at least one of other process equipment from the plurality of process equipment 101, the plurality of sensors 102 and the plurality of controllers 103. The plurality of sensors 102 may comprise one or more sensors for measuring physical parameter of each process equipment from the plurality of process equipment 101 and the plurality of controllers 103 are configured to regulate the plurality of process equipment 101. The plurality of process equipment 101 in the industrial plant may include, but are not limited to, turbines, pumps, motors, fans, compressors, boilers, heat exchangers and so on. As shown in the figure, each of the plurality of process equipment 101 may be associated with dedicated sensors for measuring the physical parameters from the corresponding process equipment. Each of the plurality of process equipment 101 may be associated with dedicated controllers for regulating the corresponding process equipment. For example, from **Figure 1****,** the process equipment 101.2 is operationally connected with the sensor 102.2 and the controller 103.2. The sensor 102.2 is configured to measure the physical parameters from the process equipment 101.2 and the controller 103.2 is configured to regulate the process equipment 101.2. In an embodiment, a common controller may be implemented in the control system 100 (not shown in the figure), to regulate the plurality of process equipment 101. In an embodiment, the plurality of controllers 103 are configured to control one or more operations of the plurality of process equipment 101. In an embodiment, the plurality of controllers 103 are configured to determine process parameters associated with the plurality of the process equipment 101. The plurality of process equipment 101 may communicate with the plurality of sensors 102 and the plurality of controllers 103 in the field network. The communication may be established via a wired network, a wireless network or a combination of both wired network and wireless network. In an embodiment, each of the plurality of controllers 103 may communicate with each other via the control network. The control network may be a wired network, a wireless network or a combination of both wired and wireless network.

Further, the next layer of the control system 100 in bottom-up direction is a client-server network, that comprises one or more servers 104.1......104.n (hereafter referred to as one or more servers 104) and a database 105 as shown in **Figure 1****.** The one or more servers 104 and the database 105 may communicate with the plurality of sensors 102 and the plurality of controllers 103 via the control network. The physical parameters may be communicated by the plurality of sensors 102, with the one or more servers 104, via the control network. The process parameters may be communicated by the plurality of controllers 103, with the one or more servers 104 via the control network. The database 105 in the control system 100 may be configured to store historic values of the plurality of parameters, including the physical parameters and the process parameters. In an embodiment, the database 105 may be configured to receive the plurality of parameters from the one or more servers 104, for the storage. In an embodiment, the database 105 may communicate directly with the plurality of sensors 102 and the plurality of controllers 103 for receiving and storing the plurality of parameters.

The next layer of the control system 100 is a plant network that comprises one or more workstations 106 that communicate with the one or more servers 104. The one or more workstations 106 are in turn connected to a remote terminal 109 over the Internet 108. Data transmission to a remote terminal 109 over the Internet 108 is subject to security measures that are provided by construction of routers/firewalls 107. The one or more workstations 106 enable operators or engineers to configure, monitor and control operations of the plurality of controllers 103 via the one or more servers 104. The one or more servers 104 are configured to act as a bridge between the one or more workstations 106 and the one or more controllers 103 for interacting and controlling each of the plurality of controllers 103 based on the information received from the one or more workstations 106.

The one or more servers 104 in the control system 100 are configured to detect the condition of the plurality of process equipment 101. For detecting the condition of a process equipment from the plurality of the process equipment 101, the one or more servers 104 may receive real-time values of the plurality of parameters associated with the process equipment. The process parameter is received from corresponding controllers associated with the process equipment. The physical parameter is received from corresponding sensors associated with the process equipment. Upon receiving the real-time values, the one or more servers 104 detect the condition of the process equipment based on the real-time values, a weight matrix of the process equipment and a threshold attribute associated with each of the plurality of parameters for the process equipment.

The threshold attribute may be associated with each of the plurality of parameters. The abnormality in a parameter from the plurality of parameters may be determined based on corresponding threshold attribute. The threshold attribute for a parameter is determined by identifying a predefined number of nearest values in the real-time values received for the corresponding parameter. The predefined number of nearest values may be determined based on a nearest neighbour analysis on the real-time values. One or more techniques, know to a person skilled in the art, may be implemented for determining the predefined number of nearest values. Further, a standard deviation and a mean value associated with the predefined number of the nearest values is computed. Based on the computed standard deviation and the mean value, the threshold attribute is determined for each of the plurality of parameters.

The weights in the weight matrix may be used to identify association of each of the plurality of faults in the process equipment with each of the plurality of parameters relating to the process equipment. The weight matrix of the process equipment comprises rows and columns as the plurality of faults and the plurality of parameters associated with the process equipment, and weights indicating dependency of each of the plurality of faults with each of the plurality of parameters. The weight matrix for the process equipment is generated using a plurality of historic values of the plurality of parameters. The plurality of historic values may be received from the database 105. The plurality of historic values is associated with the plurality of process equipment 101 relating to a type of the process equipment. For example, consider the process equipment for which the condition is to be detected is a Direct Current (DC) series motor, the plurality of historic values of all motors (which may include, but not limited to DC series motor, DC shunt motor, induction motor and so on) in the industrial plant, may be received for generating the weight matrix for the motor.

In an embodiment, the plurality of historic values received for the process equipment may be pre-processed. The pre-processing may include outlier removal, noise filtering, data resampling, removing transients and removing section of data which may not be useful for generating the weight matrix from the plurality of historic values.

Upon the pre-processing, the plurality of historic values, are classified into two or more data segments including first set of data segments and remaining sets of data segments. For the classification, occurrence of one or more faults associated with the process equipment during the predefined duration of time is identified. The first set of data segments from the plurality of historic values is determined based on the identification. Each data of the first set of data segments includes one or more historic values within a predefined time window before a time instance of occurrence of fault from the plurality of faults in the predefined duration of time. For example, consider a fault is identified to be occurred at a time instance `t', and predefined time window to be 's' seconds. One or more historic values in a window of `s' seconds before the time instance 't' may be considered as to be one of the first set of data segments. In an embodiment, the first set of data segments may be considered to be associated with abnormal condition of the process equipment. Remaining one or more historic values, apart from the first set of data segment, may be associated with remaining sets of data segments. In an embodiment, each of the remaining sets of the data segments may be classified to be associated with one of critical condition, warning condition and normal condition of the process equipment.

Upon determining the first set of data segments, a decision tree model for the process equipment is generated based on the plurality of parameters related to the first set of data segments and the plurality of faults. The decision tree model comprises a plurality of nodes and the plurality of nodes comprises a root node and a plurality of leaf nodes . Each of the plurality of nodes represents a parameter from the plurality of parameters. The plurality of nodes are positioned in a hierarchical pattern. Position of the each of the plurality of nodes in the hierarchical pattern indicates strength of corresponding node for identifying a fault in the process equipment. The decision tree is generated by generating one or more splits for the plurality of parameters relating to the first set of data segments. Each of the one or more splits indicate occurrence of fault corresponding to the historic values in the first set of data segments. Further, a cost value of each of the one or more splits is computed. The cost value indicates accuracy of the occurrence of the corresponding fault. The plurality of parameters are placed in the hierarchical pattern of the decision tree model based on the cost value of corresponding split. The parameter associated with a split with least cost value is placed as the root node in the decision tree model. Remaining parameters are placed from top-to bottom in an ascending order of respective cost value.

Based on the decision tree, the weight matrix for the process equipment is generated. The weight matrix comprises the plurality of faults, the plurality of parameters and weights corresponding to the plurality of parameters for each of the plurality of faults. The weights for each of the plurality of parameters is computed based on distance of corresponding node in the decision tree model from the root node.

The condition of the process equipment is detected by calculating an index value for each of the plurality of faults associated with the process equipment based on the real-time values and corresponding weight of the plurality of parameters from the weight matrix. The index value is compared with the threshold attribute of the corresponding parameter, to identify the corresponding parameter to be in an abnormal state. The corresponding parameter is identified to be in abnormal state when the index value is greater than the threshold attribute. Further, the condition of the process equipment is detected based on parameters identified to be in the abnormal state.

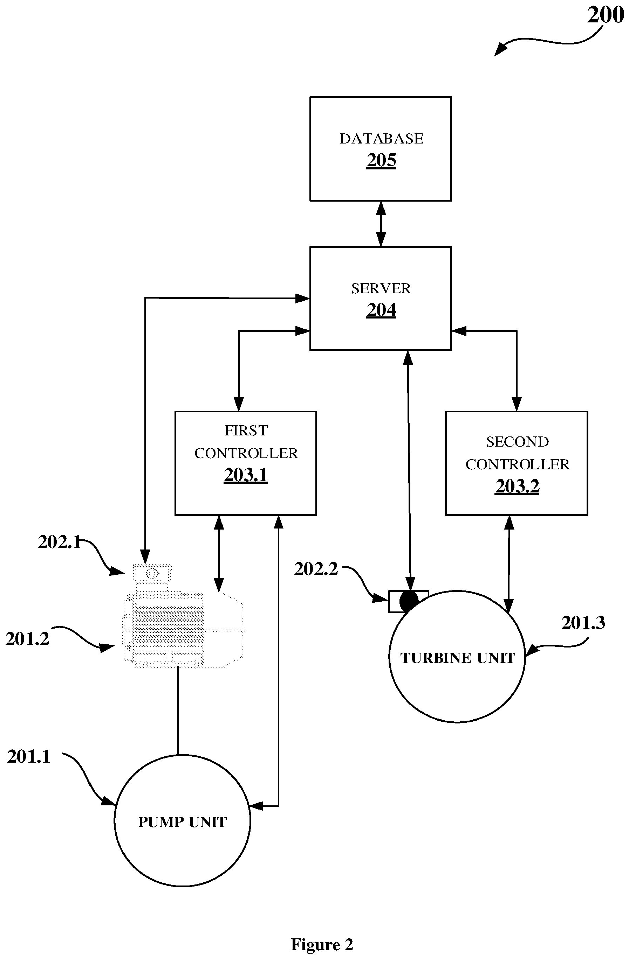

**Figure 2** shows an exemplary environment 200 of the control system 100 for detecting condition of the plurality of process equipment 101, in accordance with an embodiment of the present disclosure. The exemplary environment 200 of the control system 100 comprises the plurality of process equipment 101 including a pump unit 201.1, a motor 201.2 and a turbine unit 201.3. The exemplary environment 200 of the control system 100 further comprises the plurality of sensors 102 including a first sensor 202.1 and a second sensor 202.2, the plurality of controllers 103 including first controller 203.1 and second controller 203.2, a server 204 and a database 205. The motor 201.2 and the pump unit 201.1 are operationally coupled with each other. The first sensor 202.1 is coupled with the motor 201.2 and the second sensor 202.2 is coupled with the turbine unit 201.3. In an embodiment, the first sensor 202.1 and the second sensor 202.2 may be embedded on the motor 201.2 and the turbine unit 201.2, respectively. The first sensor 202.1 is configured to measure the physical parameters from the motor 201.2. The second sensor 202.2 is configured to measure the physical parameters from the turbine unit 201.2. Further, the first controller 203.1 is associated with the motor 201.2 and the second controller 203.2 is associated with the turbine unit 201.2. The first controller 203.1 is configured to regulate the motor 201.2 and the pump unit 201.1 and determine the process parameters associated with the motor 201.2 and the pump unit 201.1. The second controller 203.2 is configured to regulate the turbine unit 201.2 and determine the process parameter associated with the turbine unit 201.2. The plurality of parameters, including the process parameter and the physical parameter may be received by the server 204, via the first sensor 202.1, the second sensor 202.2, the first controller 203.1 and the second controller 203.2. In an embodiment, both real-time values and the historic values of the plurality of parameters may be received by the server 204. The database 205 is configured to store the historic values of the plurality of parameters. In an embodiment, the database 205 may be configured to store the real-time values of the plurality of parameters, along with the historic values.

The server 204 is configured to detect condition of the motor 201.2, the pump unit 201.1 and the turbine unit 201.2. In an embodiment, the server 204 may include a processor and a memory (not shown in the figure), for detecting the condition. The memory may be operationally coupled with the processor. The memory may comprise modules and data, which on execution may cause the processor to perform the detection of the condition, as disclosed in the present invention. In an embodiment, the database 205 may be an integral part of the server 204. In an embodiment, the server 204 may be a cloud-based server 204 which may be connected to the sensors 202.1 and 202.2 and the controllers 203.1 and 203.2 via any communication network known to a person skilled in the art. In an embodiment, the server 204 may be a dedicated server operationally connected to the sensors 202.1 and 202.2 and the controllers 203.1 and 203.2.

Consider, the condition of the turbine unit 201.2 to be detected by the server 204. For the detection, the server 204 receives real-time values of the plurality of parameters associated with the turbine unit 201.2. The plurality of parameters include the process parameters from the second controller 203.2 and the physical parameters from the second sensor 202.2. In an embodiment, the process parameter may be one or more parameters that may be computed based on output from a process equipment. For example, the process parameters of the turbine unit 201.2 may include, but are not limited to, current, torque, speed, rotational velocity, harmonics and so on. The process parameters of the turbine unit 201.2 are computed by the second controller 203.2. The server 204 receives the process parameters associated with the turbine unit 201.2 from the second controller 203.2. The physical parameters may be one or more parameters that are physically measured or sensed from the process equipment. For example, the physical parameter of the turbine unit 201.2 may include, but are not limited to, temperature, pressure, open/close state of valve, vibration, rotor displacement and so on. The physical parameters of the turbine unit 201.2 may be measured by the second sensor 202.2. The server 204 receives the physical parameters associated with the turbine unit 201.2 from the second sensor 202.2. The server 204 detects the condition of the turbine unit 201.2 based on the real-time values of the plurality of parameters of the turbine unit 201.2, a weight matrix of the turbine unit 201.2 and a threshold attribute associated with each of the plurality of parameters for the turbine unit 201.2.

The weight matrix for the turbine unit 201.2 is generated by the server 204 using a unsupervised machine learning technique. The weight matrix for the turbine unit 201.2 may be generated and stored in the memory associated with the server 204. In an embodiment, the weight matrix may be stored in the database 205. In an embodiment, the weight matrix may be generated at real-time, for detecting the condition of the turbine unit 201.2.

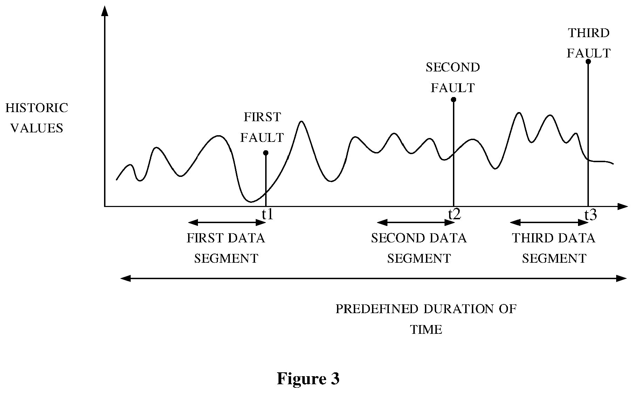

For generating the weight matrix of the turbine unit 201.2, the server 204 may be configured to receive the plurality of historic values of the plurality of parameters. The plurality of historic values by received from the database 205. The plurality of historic values may be relating to all the turbine units in the industrial plant. The weights in the weight matrix may be used to identify association of each of plurality of faults of the turbine unit 201.2 with the each of the plurality of parameters. The plurality of faults are defects or issues associated with functioning of the turbine unit 201.2. For example, the plurality of faults relating to the turbine unit 201.2, may include but are not limited to, turbine leakage, overheating, blade failure, rotor displacement and so on. The plurality of historic values may be gathered by monitoring the turbine units in the industrial plant. The gathered plurality of historic values may be stored in the database 205 and retrieved from the database 205 for generating the weight matrix. The plurality of historic values for a predefined duration of time is analysed for the generation. The predefined duration of time may be selected such that good number of faults have occurred in the turbine units. For example, the predefined duration of the time may be three years and number of the plurality of parameters may be forty five to be monitored for generating the weight matrix. The plurality of historic values may be received with sample time of one second interval. In an embodiment, the server 204 may receive data associated with the plurality of historic values in Comma-Separated Values (CSV) format, for the analysis. **Figure 3** illustrates graph plotted for the plurality of historic values of the plurality of parameters against the predefined duration of time, for the turbine unit 201.2. The server 204 is configured to identify occurrence of one or more faults associated with the turbine unit 201.2 in the plurality of historic values. Consider the fault to be identified is leakage fault in the turbine unit 201.2. Occurrence of the leakage fault in the turbine unit 201.2 at one or more time instances in the predefined duration of time is identified. In the graph, the one or more faults (i.e., the leakage faults) in the turbine unit 201.2 are indicated as first fault, second fault and third fault. The first fault occurs at time instance 't1', the second fault occurs at time instance 't2' and the third fault occurs at time instance 't3'. Based on the occurrence of the leakage faults, the plurality of historic values are classified to one or more data segments including the first set of data segments. Each data of the first set of data segments includes one or more historic values within the predefined time window before a time instance of the one or more faults in the predefined duration of time. The predefined time window may vary from few seconds to certain number of days. For example, the one or more historic values occurring in window of twenty hours before the occurrence of a fault may be selected to be the first set of data segment. In the graph, the first set of data segments include first data segment, second data segment and third data segment. The first data segment include data in the predefined time window before occurrence of the first fault at the time instance 't1'. The second data segment include data in the predefined time window before occurrence of the second fault at the time instance 't2'. The third data segment include data in the predefined time window before occurrence of the third fault at the time instance 't3'. In an embodiment, the predefined time window may be tunable parameter from few hours to several days depending on the process equipment for which the weight matrix is to be generated. In an embodiment, variety of the predefined time windows may be used to generate library of weight matrices corresponding to each time interval. A weight matrix from the library of weight matrices, for the detection of the condition, may be selected using validation techniques. The one or more historic values in the first data segment, the second data segment and the third data segment may be considered to be abnormal or faulty in nature. In an embodiment, remaining historic values, apart from the one or more historic values in the first set of data segments, may be considered to be associated with normal condition of the turbine unit 201.2.

In an embodiment, for better indication of condition of the turbine unit 201.2, the data segments may be further be classified to second set of data segments, third set of data segments and fourth set of data segments. Each of the second set of data segments, the third set of data segments and the fourth set of data segments include one or more historic values from the plurality of historic values. Respective one or more historic values may be associated with corresponding predefined time window. The second set of data segments may include the one or more historic values occurring before the first set of data segments for respective predefined time window. The one or more historic values in the second set of data segments may be considered to be associated with critical condition of the turbine unit 201.2. Similarly, the third set of data segments may include the one or more historic values occurring before the second set of data segments for respective predefined time window. The one or more historic values in the third set of data segments may be considered to be associated with warning condition of the turbine unit 201.2. Similarly, the fourth set of data segments may include the one or more historic values occurring before the third set of data segments for respective predefined time window. The one or more historic values in the fourth set of data segments may be considered to be associated with normal condition of the turbine unit 201.2. For example, the one or more historic values occurring one day prior to the occurrence of the one or more faults may be identified to be associated with the first set of data segment. The one or more historic values occurring five days prior to the first set of data segment may be identified to be associated with the second set of data segments. The one or more historic values occurring ten days prior to the second set of data segment may be identified to be associated with the third set of data segments. Remaining one or more historic values occurring prior to the third set of data segments may be identified to be associated with the fourth set of data segments. One or more other techniques, known to a person skilled in the art, for classifying the plurality of historic values to be associated with at least one of the abnormal condition, the critical condition, the warning condition and the normal condition, may be implemented in the present invention.

Further, based on the data segments, a decision tree model corresponding to the turbine unit 201.2 is generated by the server 204 using data in the data segments and the plurality of faults. The decision tree model comprises a plurality of nodes and the plurality of nodes comprises the root node and the plurality of leaf nodes . Each of the plurality of nodes represents a parameter from the plurality of parameters. The plurality of nodes are positioned in a hierarchical pattern. Position of the each of the plurality of nodes indicates strength of corresponding node for identifying a fault in the turbine unit 201.2. The decision tree is generated by generating one or more splits for the plurality of parameters relating to the first set of data segments. Each of the one or more splits indicate occurrence of fault corresponding to the historic values in the first set of data segments. One or more techniques, known to a person skilled in the art may be implemented for generating the one or more splits. The cost value of each of the one or more splits is computed. The cost value indicates accuracy of the occurrence of the corresponding fault. In an embodiment, the cost value may indicate maximum separation between parameters identified to be faulty in nature and the parameters identified to be normal in nature. One or more techniques, known to a person skilled in the art may be implemented for computing said cost value. The plurality of parameters are placed in the hierarchical pattern of the decision tree model based on the cost value of corresponding split. The parameter associated with a split with least cost value is placed as the root node in the decision tree model. The parameters associated with highest cost value are placed at bottom of the hierarchical pattern. In an embodiment, ascending order of the cost values is considered for positioning the plurality of parameters in the hierarchical pattern. In an embodiment, a machine learning model may be implemented for generating the decision tree. The decision tree represents well defined rules that separate data associated with the abnormal condition, the warning condition, the critical condition and the normal condition. The decision tree identifies the rules and also the parameters that may separate data set associated with the plurality of parameters. Based on the decision tree, identification of one or more parameters which are influencing the occurrence of each of the plurality of faults may be identified.

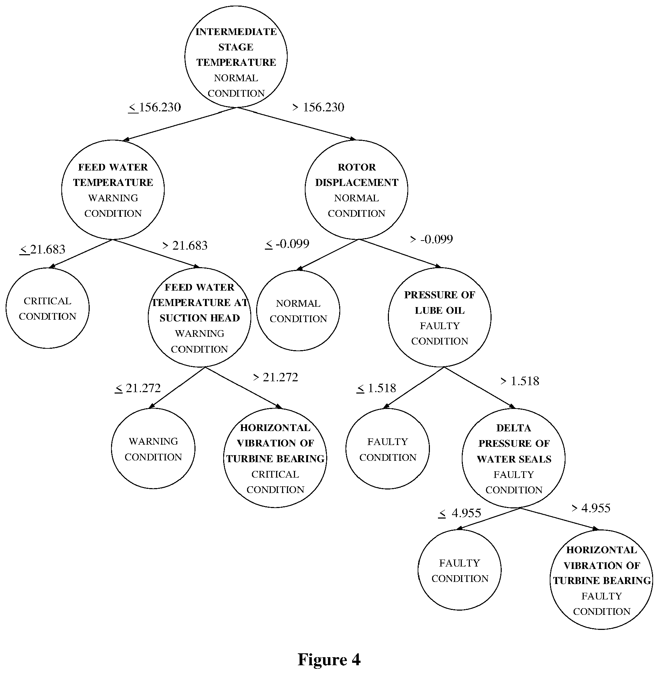

**Figure 4** illustrates an exemplary representation of the decision tree for the turbine unit 201.2. As illustrated, the data is split into four classes namely the abnormal condition, the warning condition, the critical condition and the normal condition. Consider the plurality of parameters associated with the first set of the data segment may be intermediate stage temperature, feed water temperature, feed water temperature at suction head, rotor displacement, pressure of lube oil, delta pressure of water seals and horizontal vibration for turbine bearing. Based on the generated one or more splits and the cost value, said plurality of parameters may be positioned in the hierarchical pattern as shown in the figure. The intermediate stage temperature may be associated with the least cost value and hence is positioned as the root node in the decision tree. The feed water temperature and the rotor displacement may be associated be cost value greater than the cost value associated with the intermediate stage temperature. Hence, the feed water temperature and the rotor displacement are positioned as leaf nodes of the root node. Similarly, the feed water temperature at suction head may be associated with the cost value greater than the cost value of the feed water temperature. Hence, the feed water temperature at suction head is positioned as leaf node of the feed water temperature. Similarly, the pressure of lube oil may be associated with the cost value greater than the cost value of the rotor displacement. Hence, the pressure of lube oil is positioned as leaf node of the rotor displacement. Likewise, remaining plurality of parameters are positioned in the hierarchical pattern for generating the decision tree as illustrated in **Figure 4****.** The hierarchical pattern, starting from the root node, indicates decreasing order of influence of corresponding parameter on the fault of turbine leakage. Using the decision tree, the weight matrix for the plurality of faults and the fault of turbine leakage for the turbine unit 201.2 may be generated. From the decision tree, the intermediate stage temperature may be provided with highest weightage and the horizontal vibration of the turbine bearing may be provided with least weightage. An exemplary representation of the weight matrix is illustrated in **Table 2** given below.

**Table 2**

| | Intermediate stage Temperature | Rotor Displacement | Pressure of lube oil | Delta Pressure of water seals | Horizontal vibration turbine bearing | Feed water temperature | Feed water temperature at suction head |
|---|---|---|---|---|---|---|---|
| Turbine Leakage | 10 | 9 | 9 | 8 | 8 | 7 | 7 |

From the weight matrix, the intermediate stage temperature is identified to be most influencing parameter with weightage of 10 on scale of 1 to 10. The rotor displacement and the pressure at lube oil are identified to be lesser influencing with weightage of 9. Further, the delta pressure of water seals and the horizontal vibration of the turbine bearing are identified to lesser influencing with weightage of 8. The feed water temperature and the feed water temperature at suction head are identified to be least influencing with weightage of 7.

Similar technique may be used for generating the weight matrix of the motor 201.2 and the pump unit 201.1 as well.

An exemplary represented a weight matrix for fault of rotor eccentricity in the motor 201.2 may be as illustrated in **Table 3** given below:

**Table 3**

| | Amplitude of axial vibration | Speed of machine | Pressure of fluid | Flow rate of fluid |
|---|---|---|---|---|
| Rotor eccentricity | 9 | 7 | 3 | 0 |

Further, at the real-time, for the detection of the condition of the turbine unit 201.2, the abnormality in each of the plurality of parameters may be determined based on corresponding threshold attribute. In an embodiment, the threshold attribute for each of the plurality of parameters of the turbine unit 201.2 may be determined using a Principle Component Analysis (PCA) model. The threshold attribute for a corresponding parameter may be determined by identifying a predefined number of nearest values in the real-time values received for the corresponding parameter. In an embodiment, the predefined number may vary from two to ten and may be tuned based on one or more factors like process equipment type, parameters and so on. The predefined number of nearest values may be determined based on a nearest neighbour analysis on the real-time values. Further, a standard deviation and a mean value associated with the predefined number of the nearest values is computed. Based on the computed standard deviation and the mean value, the threshold attribute may be determined for the corresponding parameter. Similar technique may be used for determining threshold attribute for each of the plurality of parameter.

The condition of the corresponding process equipment is detected by calculating an index value for each of the plurality of faults associated with the turbine unit 201.2 on the real-time values and corresponding weight of the plurality of parameters from the weight matrix. The index value is compared with the threshold attribute of the corresponding parameter, to identify the corresponding parameter to be in an abnormal state. The corresponding parameter is identified to be in abnormal state when the index value is greater than the threshold attribute. Further, the condition of the turbine unit 201.2 is detected based on parameters identified to be in the abnormal state.

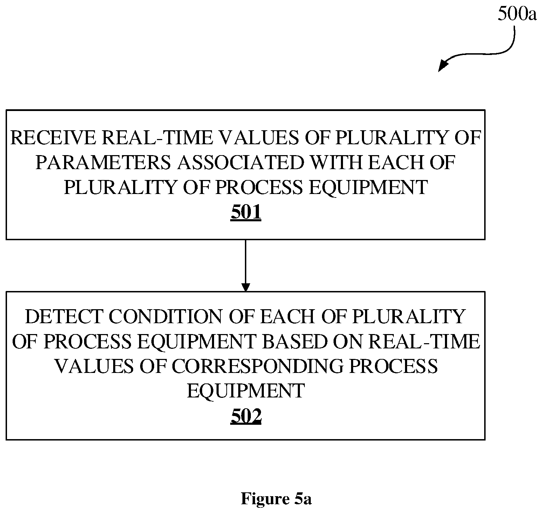

**Figure 5a** illustrates a flowchart for detecting condition of the plurality of process equipment 101.

At block 501, the one or more servers 104 of the control system100 may be configured to receive real-time values of the plurality of parameters associated with each of the plurality of process equipment 101. Each of the plurality of parameters corresponds to one of a process parameter received from the plurality of controllers 103, and the physical parameter received from the plurality of sensors 102, associated with the plurality of process equipment 101.

At block 502, the one or more servers 104 of the control system100 may be configured to detect condition of each of the plurality of process equipment 101 based on the real-time values of the corresponding process equipment, the weight matrix of the corresponding process equipment and the threshold attribute associated with each of the plurality of parameters for the corresponding process equipment.

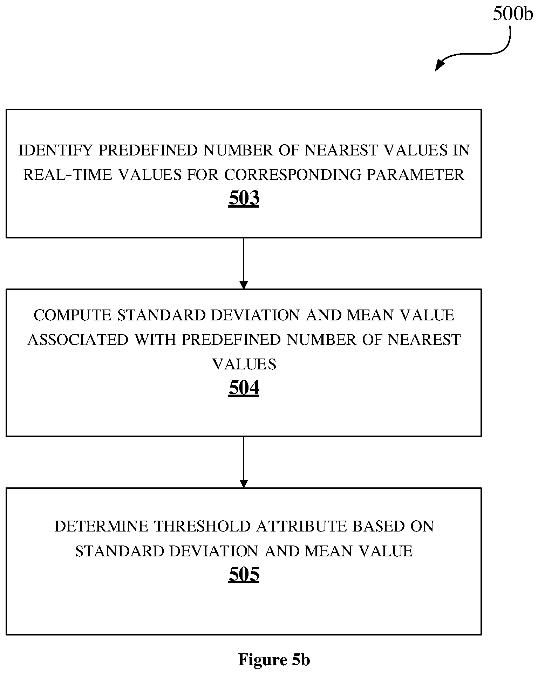

**Figure 5b** illustrates a flowchart for determining the threshold attribute for each of the plurality of parameters.

At block 503, the one or more servers 104 of the control system100 may be configured to identify the predefined number of nearest values in the real-time values received for the corresponding parameter based on the nearest neighbour analysis on the real-time values.

At block 504, the one or more servers 104 of the control system100 may be configured to compute the standard deviation and the mean value associated with the predefined number of the nearest values. One or more techniques, known to a person skilled in the art may be implemented to compute the standard deviation and the mean value.

At block 505, the one or more servers 104 of the control system100 may be configured to determine the threshold attribute based on the computed standard deviation and the mean value.

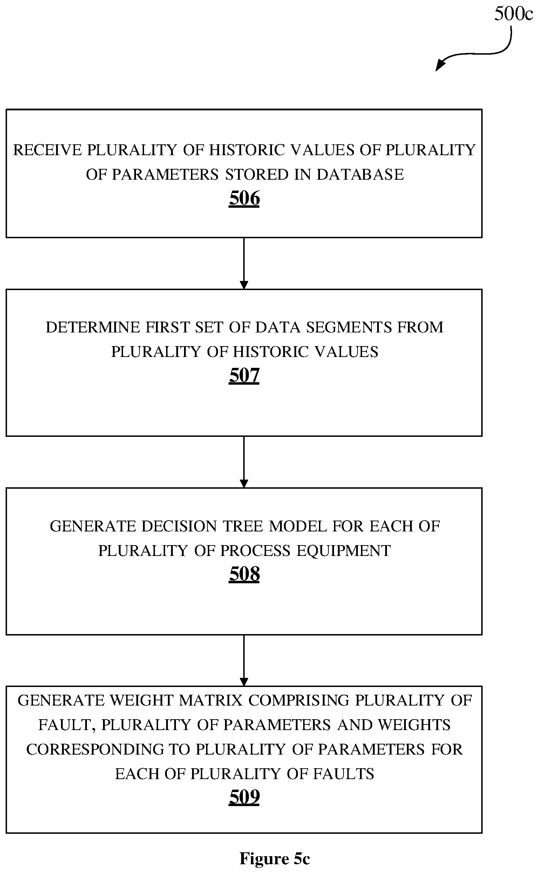

**Figure 5c** illustrates a flowchart for generating the weight matrix for each of the plurality of process equipment 101.

At block 506, the one or more servers 104 of the control system100 may be configured to receive the plurality of historic values of the plurality of parameters stored in the database 105. The plurality of historic values is associated with the plurality of process equipment 101 relating to a type of corresponding process equipment.

At block 507, the one or more servers 104 of the control system100 may be configured to identify occurrence of the one or more faults associated with the corresponding process equipment during the predefined duration of time.

At block 508, the one or more servers 104 of the control system100 may be configured to determine the first set of data segments from the plurality of historic values. The each data of the first set of data segments includes the one or more historic values within the predefined time window before a time instance of fault from the plurality of faults in the predefined duration of time.

At block 509, the one or more servers 104 of the control system100 may be configured to generate the decision tree model for each of the plurality of process equipment 101 based on the plurality of parameters related to the first set of data segments and the plurality of faults. The decision tree model comprising a plurality of nodes with the root node and the plurality of leaf nodes . Each of the plurality of nodes represents a parameter from the plurality of parameters. The plurality of nodes are positioned in the hierarchical pattern and the position of the each of the plurality of nodes indicates strength of corresponding node for identifying a fault in the corresponding process equipment.

At block 510, the one or more servers 104 of the control system100 may be configured to generate the weight matrix comprising the plurality of faults, the plurality of parameters and the weights corresponding to the plurality of parameters for each of the plurality of faults. The weights for each of the plurality of parameters is computed based on distance of corresponding node in the decision tree model from the root node.

In an embodiment, the present disclosure discloses an automated method for detecting health of a process equipment in an industrial plant. Also, along condition detection, task of knowledge recovery may also be automated in the present invention.

In an embodiment, the present disclosure a user friendly control system in which the user may instantiate generating of weight matrix for detection of condition of process equipment without depending on domain expertise.

This written description uses examples to describe the subject matter herein, including the best mode, and also to enable any person skilled in the art to make and use the subject matter. The patentable scope of the subject matter is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**REFERRAL NUMERALS**

| **Reference Number** | **Description** |
|---|---|
| 100 | Control System |
| 101 | Plurality of process equipment |
| 102 | Plurality of sensors |
| 103 | Plurality of controllers |
| 104 | One or more servers |
| 105 | Database |
| 106 | One or more workstations |
| 107 | Routers/Firewalls |
| 108 | Internet |
| 109 | Remote terminal |
| 200 | Exemplary environment |
| 201.1 | Pump unit |
| 201.2 | Motor |
| 201.3 | Turbine unit |
| 202.1 | First sensor |
| 202.2 | Second sensor |
| 203.1 | First controller |
| 203.2 | Second controller |
| 204 | Server |
| 205 | Database |

## Claims

1. A method for detecting condition of a plurality of pieces of process equipment (101) in an industrial plant, by a control system (100), wherein each of the plurality of pieces of process equipment (101) is operationally connected with at least one other piece of process equipment from the plurality of pieces of process equipment (101), wherein the control system (100) comprises a plurality of sensors (102) and a plurality of controllers (103), wherein the plurality of sensors (102) comprises one or more sensors (102) for measuring one or more physical parameters of each piece of process equipment from the plurality of pieces of process equipment (101) and the plurality of controllers (103) are configured to regulate the plurality of pieces of process equipment (101), wherein the control system (100) further comprises a database (105) configured to store historic values of a plurality of parameters of the plurality of pieces of process equipment (101), the method comprising:
receiving real-time values of the plurality of parameters associated with each of the plurality of pieces of process equipment (101), wherein each of the plurality of parameters corresponds to a process parameter received from the plurality of controllers (103) or one of the physical parameters associated with the plurality of pieces of process equipment (101); and
detecting condition of each of the plurality of pieces of process equipment (101) based on the real-time values of the corresponding piece of process equipment, a weight matrix of the corresponding piece of process equipment (101) and a threshold attribute associated with each parameter of the plurality of parameters for the corresponding piece of process equipment,
wherein the threshold attribute for a corresponding parameter is determined by performing the steps of:
identifying a predefined number of nearest values in the real-time values received for the corresponding parameter based on a nearest neighbour analysis on the real-time values; and
determining the threshold attribute based on standard deviation and mean value associated with the predefined number of nearest values,
wherein the weight matrix for the corresponding piece of process equipment (101) is generated by performing the steps of:
receiving a plurality of historic values of the plurality of parameters stored in the database (105), wherein the plurality of historic values associated with the plurality of pieces of process equipment (101) relate to a type of the corresponding piece of process equipment;
identifying occurrence of one or more faults of a plurality of faults associated with a corresponding piece of process equipment, during a predefined duration of time;
determining a first set of data segments from the plurality of historic values, wherein each data of the first set of data segments includes one or more historic values within a predefined time window before a time instance of fault from the plurality of faults in the predefined duration of time,
generating a decision tree model for each of the plurality of pieces of process equipment (101) based on the plurality of parameters related to the first set of data segments and the plurality of faults, wherein the decision tree model comprises a plurality of nodes, wherein the plurality of nodes comprises a root node and a plurality of leaf nodes , wherein each of the plurality of nodes represents a parameter from the plurality of parameters, wherein the plurality of nodes are positioned in a hierarchical pattern, wherein a position of each of the plurality of nodes indicates a strength of the corresponding node for identifying a fault in the corresponding piece of process equipment; and
generating the weight matrix comprising the plurality of faults, the plurality of parameters and weights corresponding to the plurality of parameters for each of the plurality of faults, wherein the weights for each of the plurality of parameters is computed based on distance of corresponding node in the decision tree model from the root node.

2. The method as claimed in claim 1, wherein detecting the condition of the corresponding piece of process equipment comprises:
calculating an index value for each of the plurality of faults associated with the corresponding piece of process equipment based on the real-time values and the corresponding weights of the plurality of parameters from the weight matrix;
comparing the index value with the threshold attribute of the corresponding parameter, to identify the corresponding parameter to be in an abnormal state, wherein the corresponding parameter is identified to be in abnormal state when the index value is greater than the threshold attribute; and
detecting the condition of the corresponding piece of process equipment based on parameters identified to be in the abnormal state.

3. The method as claimed in claim 1, wherein generating the decision tree model comprises:
generating one or more splits for the plurality of parameters relating to the first set of data segments, wherein each of the one or more splits indicate occurrence of a fault corresponding to the historic values in the first set of data segments;
determining a cost value of each of the one or more splits; and
placing the plurality of parameters in the hierarchical pattern of the decision tree model based on the cost value of corresponding split, wherein a parameter associated with a split with least cost value is placed as the root node in the decision tree model.

4. A control system (100) comprising one or more servers (104) for detecting condition of a plurality of pieces of process equipment (101) in an industrial plant, wherein each of the plurality of pieces of process equipment (101) is operationally connected with at least one other piece of process equipment from the plurality of pieces of process equipment (101), wherein the control system (100) comprises a plurality of sensors (102) and a plurality of controllers (103) and the one or more servers (104) are connected the plurality of sensors (102) and the plurality of controllers (103) via the control network, wherein the plurality of sensors (102) comprises one or more sensors (102) for measuring one or more physical parameters of each piece of process equipment from the plurality of pieces of process equipment (101) and the plurality of controllers (103) are configured to regulate the plurality of pieces of process equipment (101), wherein the control system (100) further comprises a database (105) configured to store the historic values of a plurality of parameters of the plurality of pieces of process equipment (101), wherein the one or more servers (104) are configured to:
receive real-time values of the plurality of parameters associated with each of the plurality of pieces of process equipment (101), wherein each of the plurality of parameters corresponds to a process parameter received from the plurality of controllers (103) or one of the physical parameters associated with the plurality of pieces of process equipment (101); and
detect condition of each of the plurality of pieces of process equipment (101) based on the real-time values of the corresponding piece of process equipment, a weight matrix of the corresponding piece of process equipment and a threshold attribute associated with each parameter of the plurality of parameters for the corresponding piece of process equipment,
wherein the threshold attribute for a corresponding parameter is determined by performing the steps of:
identify a predefined number of nearest values in the real-time values received for the corresponding parameter based on a nearest neighbour analysis on the real-time values; and
determine the threshold attribute based on a standard deviation and mean
value associated with the predefined number of nearest values,
wherein the weight matrix for the corresponding piece of process equipment is generated by performing the steps of:
receive a plurality of historic values of the plurality of parameters stored in the database (105), wherein the plurality of historic values associated with the plurality of pieces of process equipment (101) relate to a type of the corresponding piece of process equipment;
identify occurrence of one or more faults of a plurality of faults associated with a corresponding piece of process equipment during a predefined duration of time;
determine a first set of data segments from the plurality of historic values, wherein each data of the first set of data segments includes one or more historic values within a predefined time window before a time instance of fault from the plurality of faults in the predefined duration of time,
generate a decision tree model for each of the plurality of pieces of process equipment (101) based on the plurality of parameters related to the first set of data segments and the plurality of faults, wherein the decision tree model comprises a plurality of nodes, wherein the plurality of nodes comprises a root node and a plurality of leaf nodes , wherein each of the plurality of nodes represents a parameter from the plurality of parameters, wherein the plurality of nodes are positioned in a hierarchical pattern, wherein a position of each of the plurality of nodes indicates a strength of the corresponding node for identifying a fault in the corresponding piece of process equipment; and
generate the weight matrix comprising the plurality of faults, the plurality of parameters and weights corresponding to the plurality of parameters for each of the plurality of faults, wherein the weights for each of the plurality of parameters is computed based on distance of corresponding node in the decision tree model from the root node.

5. The control system (100) as claimed in claim 4, wherein the one or more servers (104) detect the condition of the corresponding piece of process equipment by performing the steps of:
calculating an index value for each of the plurality of faults associated with the corresponding piece of process equipment based on the real-time values and corresponding weight of the plurality of parameters from the weight matrix;
comparing the index value with the threshold attribute of the corresponding parameter, to identify the corresponding parameter to be in an abnormal state, wherein the corresponding parameter is identified to be in abnormal state when the index value is greater than the threshold attribute; and
detecting the condition of the corresponding piece of process equipment based on parameters identified to be in the abnormal state.

6. The control system (100) as claimed in claim 4, wherein the one or more servers (104) generate the decision tree model by performing the steps of:
generating one or more splits for the plurality of parameters relating to the first set of data segments, wherein each of the one or more splits indicate occurrence of a fault corresponding to the historic values in the first set of data segments;
determining a cost value of each of the one or more splits; and
placing the plurality of parameters in the hierarchical pattern of the decision tree model based on the cost value of corresponding split, wherein a parameter associated with a split with least cost value is placed as the root node in the decision tree model.

## Patentansprüche

1. Verfahren zum Bestimmen des Zustands einer Vielzahl von Teilen von Prozessausrüstung (101) in einer Industrieanlage durch ein Steuerungssystem (100), wobei jedes der Vielzahl von Teilen von Prozessausrüstung (101) mit mindestens einem anderen Teil von Prozessausrüstung aus der Vielzahl von Teilen von Prozessausrüstung (101) funktionsfähig verbunden ist, wobei das Steuerungssystem (100) eine Vielzahl von Sensoren (102) und eine Vielzahl von Steuerungen (103) umfasst, wobei die Vielzahl von Sensoren (102) einen oder mehrere Sensoren (102) zum Messen eines oder mehrerer physikalischere Parameter jedes Teils von Prozessausrüstung aus der Vielzahl von Teilen von Prozessausrüstung (101) umfasst und die Vielzahl von Steuerungen (103) konfiguriert ist, die Vielzahl von Teilen von Prozessausrüstung (101) zu regulieren, wobei das Steuerungssystem (100) ferner eine Datenbank (105) umfasst, die konfiguriert ist, historische Werte einer Vielzahl von Parametern der Vielzahl von Teilen von Prozessausrüstung (101) zu speichern, das Verfahren umfassend:
Empfangen von Echtzeitwerten der Vielzahl von Parametern, die mit jedem der Vielzahl von Teilen von Prozessausrüstung (101) assoziiert sind, wobei jeder der Vielzahl von Parametern mit einem von der Vielzahl von Steuerungen (103) empfangenen Prozessparameter oder einem der mit der Vielzahl von Teilen von Prozessausrüstung (101) assoziierten physikalischen Parameter korrespondiert; und
Detektieren des Zustands jedes der Vielzahl von Teilen von Prozessausrüstung (101) basierend auf den Echtzeitwerten des korrespondierenden Teils von Prozessausrüstung, einer Gewichtsmatrix des korrespondierenden Teils von Prozessausrüstung (101) und einem mit jedem Parameter der Vielzahl von Parametern assoziierten Schwellenwertattribut für das korrespondierende Teil von Prozessausrüstung,
wobei das Schwellenwertattribut für einen korrespondierenden Parameter durch Durchführen der folgenden Schritte bestimmt wird:
Identifizieren einer im Voraus definierten Anzahl von nächsten Werten in den für den korrespondierenden Parameter empfangenen Echtzeitwerten basierend auf einer Analyse des nächsten Nachbarn an den Echtzeitwerten; und
Bestimmen des Schwellenwertattributs basierend auf einer Standardabweichung und einem Mittelwert, die mit der im Voraus definierten Anzahl von nächsten Werten assoziiert sind,
wobei die Gewichtsmatrix für das korrespondierende Teil von Prozessausrüstung (101) durch Durchführen der folgenden Schritte erzeugt wird:
Empfangen einer Vielzahl von in der Datenbank (105) gespeicherten historischen Werten der Vielzahl von Parametern, wobei die Vielzahl von mit der Vielzahl von Teilen von Prozessausrüstung (101) assoziierten historischen Werten zu einem Typ des korrespondierenden Teils von Prozessausrüstung in Beziehung steht;
Identifizieren eines Vorkommens eines oder mehrerer Fehler einer Vielzahl von mit einem korrespondierenden Teil von Prozessausrüstung assoziierten Fehlern während einer im Voraus definierten Zeitdauer;
Bestimmen einer ersten Menge von Datensegmenten aus der Vielzahl von historischen Werten, wobei jedes Datenelement der ersten Menge von Datensegmenten einen oder mehrere historische Werte innerhalb eines im Voraus definierten Zeitfensters vor einer Fehler-Zeitinstanz aus der Vielzahl von Fehlern in der im Voraus definierten Zeitdauer enthält,
Erzeugen eines Entscheidungsbaummodells für jedes der Vielzahl von Teilen von Prozessausrüstung (101) basierend auf der Vielzahl von Parametern, die zu der ersten Menge von Datensegmenten und der Vielzahl von Fehlern in Beziehung stehen, wobei das Entscheidungsbaummodell eine Vielzahl von Knoten umfasst, wobei die Vielzahl von Knoten einen Wurzelknoten und eine Vielzahl von Blattknoten umfasst, wobei jeder der Vielzahl von Knoten einen Parameter aus der Vielzahl von Parametern repräsentiert, wobei die Vielzahl von Knoten in einem hierarchischen Muster positioniert ist, wobei eine Position jedes der Vielzahl von Knoten eine Stärke des korrespondierenden Knotens zum Identifizieren eines Fehlers in dem korrespondierenden Teil von Prozessausrüstung angibt; und
Erzeugen der Gewichtsmatrix, die die Vielzahl von Fehlern, die Vielzahl von Parametern und Gewichten korrespondierend mit der Vielzahl von Parametern für jeden der Vielzahl von Fehlern umfasst, wobei die Gewichte für jeden der Vielzahl von Parametern basierend auf einer Distanz des korrespondierenden Knotens in dem Entscheidungsbaummodell von dem Wurzelknoten berechnet wird.

2. Verfahren nach Anspruch 1, wobei Detektieren des Zustands des korrespondierenden Teils von Prozessausrüstung umfasst:
Berechnen eines Indexwerts für jeden der Vielzahl von mit dem korrespondierenden Teil von Prozessausrüstung assoziierten Fehlern basierend auf den Echtzeitwerten und den korrespondierenden Gewichten der Vielzahl von Parametern aus der Gewichtsmatrix;
Vergleichen des Indexwerts mit dem Schwellenwertattribut des korrespondierenden Parameters, um zu identifizieren, dass der korrespondierende Parameter in einem unnormalen Status ist, wobei identifiziert wird, dass der korrespondierende Parameter in einem unnormalen Status ist, wenn der Indexwert größer als das Schwellenwertattribut ist; und
Detektieren des Zustands des korrespondierenden Teils von Prozessausrüstung basierend auf Parametern, die identifiziert wurden, in dem unnormalen Status zu sein.

3. Verfahren nach Anspruch 1, wobei Erzeugen des Entscheidungsbaummodells umfasst:
Erzeugen einer oder mehrerer Spaltungen für die Vielzahl von Parametern, die zu der ersten Menge von Datensegmenten in Beziehung stehen, wobei jede der einen oder mehreren Spaltungen das Vorkommen eines Fehlers korrespondierend mit den historischen Werten in der ersten Menge von Datensegmenten angibt;
Bestimmen eines Kostenwerts jedes der einen oder mehreren Spaltungen; und
Anordnen der Vielzahl von Parametern in dem hierarchischen Muster des Entscheidungsbaummodells basierend auf dem Kostenwert einer korrespondierenden Spaltung, wobei ein mit einer Spaltung mit niedrigem Kostenwert assoziierter Parameter als der Wurzelknoten in dem Entscheidungsbaummodell angeordnet wird.

4. Steuerungssystem (100), umfassend einen oder mehrere Server (104) zum Bestimmen des Zustands einer Vielzahl von Teilen von Prozessausrüstung (101) in einer Industrieanlage, wobei jedes der Vielzahl von Teilen von Prozessausrüstung (101) mit mindestens einem anderen Teil von Prozessausrüstung aus der Vielzahl von Teilen von Prozessausrüstung (101) funktionsfähig verbunden ist, wobei das Steuerungssystem (100) eine Vielzahl von Sensoren (102) und eine Vielzahl von Steuerungen (103) umfasst und der eine oder die mehreren Server (104) mit der Vielzahl von Sensoren (102) und der Vielzahl von Steuerungen (103) über das Steuerungsnetzwerk verbunden sind, wobei die Vielzahl von Sensoren (102) einen oder mehrere Sensoren (102) zum Messen eines oder mehrerer physikalischerer Parameter jedes Teils von Prozessausrüstung aus der Vielzahl von Teilen von Prozessausrüstung (101) umfasst und die Vielzahl von Steuerungen (103) konfiguriert ist, die Vielzahl von Teilen von Prozessausrüstung (101) zu regulieren, wobei das Steuerungssystem (100) ferner eine Datenbank (105) umfasst, die konfiguriert ist, die historischen Werte einer Vielzahl von Parametern der Vielzahl von Teilen von Prozessausrüstung (101) zu speichern, wobei der eine oder die mehreren Server (104) konfiguriert sind zum:
Empfangen von Echtzeitwerten der Vielzahl von Parametern, die mit jedem der Vielzahl von Teilen von Prozessausrüstung (101) assoziiert sind, wobei jeder der Vielzahl von Parametern mit einem von der Vielzahl von Steuerungen (103) empfangenen Prozessparameter oder einem der mit der Vielzahl von Teilen von Prozessausrüstung (101) assoziierten physikalischen Parameter korrespondiert; und
Detektieren des Zustands jedes der Vielzahl von Teilen von Prozessausrüstung (101) basierend auf den Echtzeitwerten des korrespondierenden Teils von Prozessausrüstung, einer Gewichtsmatrix des korrespondierenden Teils von Prozessausrüstung und einem mit jedem Parameter der Vielzahl von Parametern assoziierten Schwellenwertattribut für das korrespondierende Teil von Prozessausrüstung,
wobei das Schwellenwertattribut für einen korrespondierenden Parameter durch Durchführen der folgenden Schritte bestimmt wird:
Identifizieren einer im Voraus definierten Anzahl von nächsten Werten in den für den korrespondierenden Parameter empfangenen Echtzeitwerten basierend auf einer Analyse des nächsten Nachbarn an den Echtzeitwerten; und
Bestimmen des Schwellenwertattributs basierend auf einer Standardabweichung und einem Mittelwert, die mit der im Voraus definierten Anzahl von nächsten Werten assoziiert sind,
wobei die Gewichtsmatrix für das korrespondierende Teil von Prozessausrüstung durch Durchführen der folgenden Schritte erzeugt wird:
Empfangen einer Vielzahl von in der Datenbank (105) gespeicherten historischen Werten der Vielzahl von Parametern, wobei die Vielzahl von mit der Vielzahl von Teilen von Prozessausrüstung (101) assoziierten historischen Werten zu einem Typ des korrespondierenden Teils von Prozessausrüstung in Beziehung steht;
Identifizieren eines Vorkommens eines oder mehrerer Fehler einer Vielzahl von mit einem korrespondierenden Teil von Prozessausrüstung assoziierten Fehlern während einer im Voraus definierten Zeitdauer;
Bestimmen einer ersten Menge von Datensegmenten aus der Vielzahl von historischen Werten, wobei jedes Datenelement der ersten Menge von Datensegmenten einen oder mehrere historische Werte innerhalb eines im Voraus definierten Zeitfensters vor einer Fehler-Zeitinstanz aus der Vielzahl von Fehlern in der im Voraus definierten Zeitdauer enthält,
Erzeugen eines Entscheidungsbaummodells für jedes der Vielzahl von Teilen von Prozessausrüstung (101) basierend auf der Vielzahl von Parametern, die zu der ersten Menge von Datensegmenten und der Vielzahl von Fehlern in Beziehung stehen, wobei das Entscheidungsbaummodell eine Vielzahl von Knoten umfasst, wobei die Vielzahl von Knoten einen Wurzelknoten und eine Vielzahl von Blattknoten umfasst, wobei jeder der Vielzahl von Knoten einen Parameter aus der Vielzahl von Parametern repräsentiert, wobei die Vielzahl von Knoten in einem hierarchischen Muster positioniert ist, wobei eine Position jedes der Vielzahl von Knoten eine Stärke des korrespondierenden Knotens zum Identifizieren eines Fehlers in dem korrespondierenden Teil von Prozessausrüstung angibt; und
Erzeugen der Gewichtsmatrix, die die Vielzahl von Fehlern, die Vielzahl von Parametern und Gewichten korrespondierend mit der Vielzahl von Parametern für jeden der Vielzahl von Fehlern umfasst, wobei die Gewichte für jeden der Vielzahl von Parametern basierend auf einer Distanz des korrespondierenden Knotens in dem Entscheidungsbaummodell von dem Wurzelknoten berechnet wird.

5. Steuerungssystem (100) nach Anspruch 4, wobei der eine oder die mehreren Server (104) den Zustand des korrespondierenden Teils von Prozessausrüstung durch Durchführen der folgenden Schritte detektieren:
Berechnen eines Indexwerts für jeden der Vielzahl von mit dem korrespondierenden Teil von Prozessausrüstung assoziierten Fehlern basierend auf den Echtzeitwerten und den korrespondierenden Gewichten der Vielzahl von Parametern aus der Gewichtsmatrix;
Vergleichen des Indexwerts mit dem Schwellenwertattribut des korrespondierenden Parameters, um zu identifizieren, dass der korrespondierende Parameter in einem unnormalen Status ist, wobei identifiziert wird, dass der korrespondierende Parameter in einem unnormalen Status ist, wenn der Indexwert größer als das Schwellenwertattribut ist; und
Detektieren des Zustands des korrespondierenden Teils von Prozessausrüstung basierend auf Parametern, die identifiziert wurden, in dem unnormalen Status zu sein.

6. Steuerungssystem (100) nach Anspruch 4, wobei der eine oder die mehreren Server (104) das Entscheidungsbaummodell erzeugen, indem sie die folgenden Schritte durchführen:
Erzeugen einer oder mehrerer Spaltungen für die Vielzahl von Parametern, die zu der ersten Menge von Datensegmenten in Beziehung stehen, wobei jede der einen oder mehreren Spaltungen das Vorkommen eines Fehlers korrespondierend mit den historischen Werten in der ersten Menge von Datensegmenten angibt;
Bestimmen eines Kostenwerts jedes der einen oder mehreren Spaltungen; und
Anordnen der Vielzahl von Parametern in dem hierarchischen Muster des Entscheidungsbaummodells basierend auf dem Kostenwert einer korrespondierenden Spaltung, wobei ein mit einer Spaltung mit niedrigem Kostenwert assoziierter Parameter als der Wurzelknoten in dem Entscheidungsbaummodell angeordnet wird.

## Revendications

1. Procédé de détection d'état d'une pluralité d'équipements de traitement (101) dans une installation industrielle, par un système de commande (100), dans lequel chacun de la pluralités d'équipements de traitement (101) est connecté fonctionnellement à au moins un autre équipement de traitement parmi la pluralité d'équipements de traitement (101), dans lequel le système de commande (100) comprend une pluralité de capteurs (102) et une pluralité de contrôleurs (103), dans lequel la pluralité de capteurs (102) comprend un ou plusieurs capteurs (102) pour mesurer un ou plusieurs paramètres physiques de chaque équipement de traitement parmi la pluralité d'équipements de traitement (101) et la pluralité de contrôleurs (103) est configurée pour réguler la pluralité d'équipements de traitement (101), dans lequel le système de commande (100) comprend en outre une base de données (105) configurée pour stocker des valeurs historiques d'une pluralité de paramètres de la pluralité d'équipements de traitement (101), le procédé comprenant :
la réception de valeurs en temps réel de la pluralité de paramètres associés à chacun de la pluralité d'équipements de traitement (101), dans lequel chacun de la pluralité de paramètres correspond à un paramètre de traitement reçu à partir de la pluralité de contrôleurs (103) ou à un des paramètres physiques associés à la pluralité d'équipements de traitement (101); et
la détection d'un état de chacun de la pluralité d'équipements de traitement (101) en fonction des valeurs en temps réel de l'équipement de traitement correspondant, d'une matrice de pondération de l'équipement de traitement correspondant (101) et d'un attribut de seuil associé à chaque paramètre de la pluralité de paramètres pour l'équipement de traitement correspondant, dans lequel l'attribut de seuil d'un paramètre correspondant est déterminé en réalisant les étapes suivantes :
l'identification d'un nombre prédéfini de valeurs les plus proches dans les valeurs en temps réel reçues pour le paramètre correspondant selon une analyse du plus proche voisin sur les valeurs en temps réel ; et
la détermination de l'attribut de seuil en fonction d'un écart type et d'une valeur moyenne associés au nombre prédéfini de valeurs les plus proches,
dans lequel la matrice de pondération pour l'équipement de traitement correspondant (101) est générée en réalisant les étapes suivantes :
la réception d'une pluralité de valeurs historiques de la pluralité de paramètres stockée dans la base de données (105), dans lequel la pluralité de valeurs historiques associée à la pluralité d'équipements de traitement (101) se rapporte à un type de l'équipement de traitement correspondant ;
l'identification d'une occurrence d'une ou plusieurs défaillances d'une pluralité de défaillances associée à un équipement de traitement correspondant, pendant une durée prédéfinie ;
la détermination d'un premier ensemble de segments de données à partir de la pluralité de valeurs historiques, dans lequel chaque donnée du premier ensemble de segments de données comporte une ou plusieurs valeurs historiques dans une fenêtre de temps prédéfinie avant une instance temporelle de défaillance de la pluralité de défaillances dans la durée prédéfinie,
la génération d'un modèle d'arbre de décision pour chacun de la pluralité d'équipements de traitement (101) en fonction de la pluralité de paramètres relatifs au premier ensemble de segments de données et de la pluralité de défaillances, dans lequel le modèle d'arbre de décision comprend une pluralité de noeuds, dans lequel la pluralité de noeuds comprend un noeud racine et une pluralité de noeuds feuilles, dans lequel chacun de la pluralité de noeuds représente un paramètre de la pluralité de paramètres, dans lequel la pluralité de noeuds est positionnée selon un schéma hiérarchique, dans lequel une position de chacun de la pluralité de noeuds indique une force du noeud correspondant pour identifier une défaillance dans l'équipement de traitement correspondant ; et
la génération de la matrice de pondération comprenant la pluralité de défaillances, la pluralité de paramètres et de poids correspondant à la pluralité de paramètres pour chacune de la pluralité de défaillances, dans lequel les poids pour chacun de la pluralité de paramètres sont calculés en fonction d'une distance de noeud correspondant dans le modèle d'arbre de décision par rapport au noeud racine.

2. Procédé selon la revendication 1, dans lequel la détection de l'état de l'équipement de traitement correspondant comprend :
le calcul d'une valeur d'indice pour chacune de la pluralité de défaillances associée à l'équipement de traitement correspondant en fonction des valeurs en temps réel et des poids correspondants de la pluralité de paramètres provenant de la matrice de pondération ;
la comparaison de la valeur d'indice à l'attribut de seuil du paramètre correspondant, pour identifier que le paramètre correspondant est un état anormal, dans lequel il est identifié que le paramètre correspondant est dans un état anormal lorsque la valeur d'indice est supérieure à l'attribut de seuil ; et
la détection de l'état de l'équipement de traitement correspondant en fonction de paramètres identifiés comme étant dans l'état anormal.

3. Procédé selon la revendication 1, dans lequel la génération du modèle d'arbre de décision comprend :
la génération d'une ou plusieurs divisions pour la pluralité de paramètres relatifs au premier ensemble de segments de données, dans lequel chacune des une ou plusieurs divisions indique une occurrence d'une défaillance correspondant aux valeurs historiques dans le premier ensemble de segments de données ;
la détermination d'une valeur du coût de chacune des une ou plusieurs divisions ; et
le placement de la pluralité de paramètres dans le modèle hiérarchique du modèle d'arbre de décision en fonction de la valeur de coût de la division correspondante, dans lequel un paramètre associé à une division ayant une valeur de coût moindre est placé comme noeud racine dans le modèle d'arbre de décision.

4. Système de commande (100) comprenant un ou plusieurs serveurs (104) pour détecter un état d'une pluralité d'équipements de traitement (101) dans une installation industrielle, dans lequel chacun de la pluralité d'équipements de traitement (101) est connecté fonctionnellement à au moins un autre équipement de traitement parmi la pluralité d'équipements de traitement (101), dans lequel le système de commande (100) comprend une pluralité de capteurs (102) et une pluralité de contrôleurs (103) et les un ou plusieurs serveurs (104) sont connectés à la pluralité de capteurs (102) et à la pluralité de contrôleurs (103) par l'intermédiaire du réseau de commande, dans lequel la pluralité de capteurs (102) comprend un ou plusieurs capteurs (102) pour mesurer un ou plusieurs paramètres physiques de chaque équipement de traitement parmi la pluralité d'équipements de traitement (101) et la pluralité de contrôleurs (103) est configurée pour réguler la pluralité d'équipements de traitement (101), dans lequel le système de commande (100) comprend en outre une base de données (105) configurée pour stocker des valeurs historiques d'une pluralité de paramètres de la pluralité d'équipements de traitement (101), dans lequel les un ou plusieurs serveurs (104) sont configurés pour :
recevoir des valeurs en temps réel de la pluralité de paramètres associés à chacun de la pluralité d'équipements de traitement (101), dans lequel chacun de la pluralité de paramètres correspond à un paramètre de traitement reçu à partir de la pluralité de contrôleurs (103) ou à un des paramètres physiques associés à la pluralité d'équipements de traitement (101) ; et
détecter un état de chacun de la pluralité d'équipements de traitement (101) en fonction des valeurs en temps réel de l'équipement de traitement correspondant, d'une matrice de pondération de l'équipement de traitement correspondant et d'un attribut de seuil associé à chaque paramètre de la pluralité de paramètres pour l'équipement de traitement correspondant,
dans lequel l'attribut de seuil d'un paramètre correspondant est déterminé en réalisant les étapes suivantes :
identification d'un nombre prédéfini de valeurs les plus proches dans les valeurs en temps réel reçues pour le paramètre correspondant selon une analyse du plus proche voisin sur les valeurs en temps réel ; et
détermination de l'attribut de seuil en fonction d'un écart type et d'une valeur moyenne associés au nombre prédéfini de valeurs les plus proches,
dans lequel la matrice de pondération pour l'équipement de traitement correspondant est générée en réalisant les étapes suivantes :
réception d'une pluralité de valeurs historiques de la pluralité de paramètres stockée dans la base de données (105), dans lequel la pluralité de valeurs historiques associée à la pluralité d'équipements de traitement (101) se rapporte à un type de l'équipement de traitement correspondant ;
identification d'une occurrence d'une ou plusieurs défaillances d'une pluralité de défaillances associée à un équipement de traitement correspondant, pendant une durée prédéfinie ;
détermination d'un premier ensemble de segments de données à partir de la pluralité de valeurs historiques, dans lequel chaque donnée du premier ensemble de segments de données comporte une ou plusieurs valeurs historiques dans une fenêtre de temps prédéfinie avant une instance temporelle de défaillance de la pluralité de défaillances dans la durée prédéfinie,
génération d'un modèle d'arbre de décision pour chacun de la pluralité d'équipements de traitement (101) en fonction de la pluralité de paramètres relatifs au premier ensemble de segments de données et de la pluralité de défaillances, dans lequel le modèle d'arbre de décision comprend une pluralité de noeuds, dans lequel la pluralité de noeuds comprend un noeud racine et une pluralité de noeuds feuilles, dans lequel chacun de la pluralité de noeuds représente un paramètre de la pluralité de paramètres, dans lequel la pluralité de noeuds est positionnée selon un schéma hiérarchique, dans lequel une position de chacun de la pluralité de noeuds indique une force du noeud correspondant pour identifier une défaillance dans l'équipement de traitement correspondant ; et
génération de la matrice de pondération comprenant la pluralité de défaillances, la pluralité de paramètres et de poids correspondant à la pluralité de paramètres pour chacune de la pluralité de défaillances, dans lequel les poids pour chacun de la pluralité de paramètres sont calculés en fonction d'une distance de noeud correspondant dans le modèle d'arbre de décision par rapport au noeud racine.

5. Système de commande (100) selon la revendication 4, dans lequel les un ou plusieurs serveurs (104) détectent l'état de l'équipement de traitement correspondant en réalisant les étapes suivantes :
calcul d'une valeur d'indice pour chacune de la pluralité de défaillances associée à l'équipement de traitement correspondant en fonction des valeurs en temps réel et des poids correspondants de la pluralité de paramètres provenant de la matrice de pondération ;
comparaison de la valeur d'indice à l'attribut de seuil du paramètre correspondant, pour identifier que le paramètre correspondant est dans un état anormal, dans lequel il est identifié que le paramètre correspondant est dans un état anormal lorsque la valeur d'indice est supérieure à l'attribut de seuil ; et
détection de l'état de l'équipement de traitement correspondant en fonction de paramètres identifiés comme étant dans l'état anormal.

6. Système de commande (100) selon la revendication 4, dans lequel les un ou plusieurs serveurs (104) génèrent le modèle d'arbre de décision en réalisant les étapes suivantes :
génération d'une ou plusieurs divisions pour la pluralité de paramètres relatifs au premier ensemble de segments de données, dans lequel chacune des une ou plusieurs divisions indique une occurrence d'une défaillance correspondant aux valeurs historiques dans le premier ensemble de segments de données ;
la détermination d'une valeur du coût de chacune des une ou plusieurs divisions ; et
le placement de pluralité de paramètres dans le modèle hiérarchique du modèle d'arbre de décision en fonction de la valeur de coût de la division correspondante, dans lequel un paramètre associé à une division ayant une valeur de coût moindre est placé comme noeud racine dans le modèle d'arbre de décision.
